# EUROPÄISCHE PATENTSCHRIFT

(11) **EP 3 402 032 B1**
(45) Veröffentlichungstag und Bekanntmachung des Hinweises auf die Patenterteilung: **26.10.2022**
(21) Anmeldenummer: 17209142.3
(22) Anmeldetag: 20.12.2017
(51) Int. Cl.: H02J 7/00, H01R 13/62, H04Q 9/00, B08B 9/00, F16L 55/00

(54) **INSPEKTIONS- UND/ODER WARTUNGSSYSTEM MIT ELEKTRISCHER SCHNITTSTELLE**
INSPECTION AND/OR MAINTENANCE SYSTEM WITH ELECTRICAL INTERFACE
SYSTÈME D'INSPECTION ET/OU DE MAINTENANCE AVEC UNE INTERFACE ÉLECTRIQUE

(30) Priorität: 10.05.2017 DE 202017102821 U
(43) Veröffentlichungstag der Anmeldung: 14.11.2018
(73) Patentinhaber: iPEK International GmbH, 87477 Sulzberg (DE)
(72) Erfinder: Endler, Hannes, 87439 Kempten (DE); Kaderabek, Harald, 87474 Buchenberg (DE); Grimm, Simon, 87437 Kempten (DE)
(74) Vertreter: 2s-ip Schramm Schneider Bertagnoll Patent- und Rechtsanwälte Part mbB

(56) Entgegenhaltungen:
- DE-A1-102008 015 388
- US-A1- 2002 190 682
- US-A1- 2007 072 443
- US-A1- 2013 164 949

## Beschreibung

### Gebiet der Erfindung

Die Erfindung betrifft ein Kanalinspektions- und/oder Wartungssystem mit einer elektrischen Schnittstelle.

### Hintergrund der Erfindung

Inspektions- und/oder Wartungssysteme, insbesondere zur Inspektion und/oder Wartung von Kanälen bzw. Rohren sind aus dem Stand der Technik bekannt. Inspektions- und/oder Wartungseinheiten solcher Systeme weisen meist elektrische Komponenten (z.B. ein Kameramodul bei einem Inspektionssystem oder ein Kameramodul in einem Spülkopf) auf, die mit elektrischer Energie versorgt werden müssen. Sofern kein elektrisches Kabel für die Energieversorgung der Inspektionsund/oder Wartungseinheiten mit in den Kanal eingebracht werden soll, ist es bekannt, für die Energieversorgung in den Inspektions- und/oder Wartungseinheiten Akkumulatoren vorzusehen.

Solche Akkumulatoren müssen regelmäßig aufgeladen werden. Hierzu wird der Akkumulator aus der Inspektions- und/oder Wartungseinheiten herausgenommen und zum Aufladen in ein Ladegerät gegeben. Nachteilig hierbei ist allerdings, dass die Gehäuseabdeckung der Inspektions- und/oder Wartungseinheit, hinter der der Akkumulator angeordnet ist, zumindest fluiddicht ausgestaltet sein muss, um ein Eindringen von sich im Kanal befindlichen Wasser zu verhindern. Diese Dichtigkeit kann insbesondere nach mehrmaligen Öffnen/Schließen nicht immer gewährleistet werden. Zudem unterliegt die Gehäuseabdeckung beim Öffnen/Schließen einem gewissen Verschleiß, was sich ebenfalls negativ auf die Dichtigkeit auswirken kann.

Alternativ sind an den Inspektions- und/oder Wartungseinheiten klassische Steckbuchsen angeordnet, in die ein Stecker eines Ladekabels eingesteckt werden kann. Der Akkumulator muss dann zum Laden nicht mehr aus der Inspektions- und/oder Wartungseinheiten herausgenommen werden. Allerdings müssen auch diese Steckbuchsen fluid- und/oder gasdicht an der Inspektions- und/oder Wartungseinheiten angeordnet werden, was nur mit erheblichem konstruktiven Mehraufwand möglich ist.

Die US 2013/0164949 A1 offenbart ein System zur Kopplung von elektronischen Geräten mit Ladeeinheiten. Die Ladeeinheit umfasst Ladekontakte, wobei die Ladekontakte beim Koppeln in Kontakt mit Ladekontakten des elektronischen Geräts gebracht werden. Das Gehäuse der Ladeeinheit ist wasserdicht und kann einen Magneten umfassen. Die Ladekontakte des elektronischen Geräts können ein magnetisches Material umfassen, sodass die Kopplung zwischen Gerät und Ladeeinheit durch eine magnetische Kraft gesichert wird.

Die US 2002/0190682 A1 offenbart ein Inspektionssystem mit einer Energiequelle, z.B. einer wieder aufladbaren Batterie. Die Energiequelle des Inspektionssystems kann durch eine externe Ladeeinheit über elektrische Kontakte des Inspektionssystems aufgeladen werden.

Die DE 10 2008 015 388 A1 offenbart ein System mit einer Prothese, die eine Speichereinrichtung für elektrische Energie und Kontaktflächen für einen elektrischen Kontakt mit einer Ladeeinrichtung aufweist, sowie einer Ladeeinrichtung, wobei die Ladeeinrichtung an der Prothese über einen Magneten gehalten ist.

Die US 2007/0072443 A1 offenbart ein System mit einem elektrischen Stecker und eine Buchse zur Aufnahme des Steckers. Der Stecker wird über einen Magneten in der Buchse gehalten.

### Aufgabe der Erfindung

Aufgabe der vorliegenden Erfindung ist es daher, Lösungen bereitzustellen, die es auf konstruktiv einfache Art und Weise erlauben, eine Energieversorgung und/oder eine Datenübertragung von und zu der Inspektions- und/oder Wartungseinheiten zu realisieren, wobei gleichzeitig eine vor einem unbeabsichtigten Lösen gesicherte Kopplung zwischen der externen Einheit und dem Kanalinspektions- und/oder Wartungssystem gewährleistet ist.

### Erfindungsgemäße Lösung

Gelöst wird diese Aufgabe mit einem Kanalinspektions- und/oder Wartungssystem nach dem unabhängigen Patentanspruch 1. Vorteilhafte Ausgestaltungen der Erfindung sind in den abhängigen Patentansprüchen angegeben.

Bereitgestellt wird demnach ein Kanalinspektions- und/oder Wartungssystem mit einer elektrischen Schnittstelle, wobei das Kanalinspektions- und/oder Wartungssystem
- eine Kanalinspektions- und/oder Wartungseinheit, und
- eine externe Einheit, die mit der Kanalinspektions- und/oder Wartungseinheit elektrisch koppelbar ist,
aufweist, wobei
- die Kanalinspektions- und/oder Wartungseinheit ein Gehäuse aufweist, das fluid- und/oder gasdicht ausgestaltet ist,
- das Gehäuse einen ersten elektrisch leitenden Abschnitt und zumindest einen zweiten elektrisch leitenden Abschnitt aufweist, wobei die elektrisch leitenden Abschnitte mittels einer Isolierschicht gegeneinander elektrisch isoliert sind,
- die externe Einheit einen ersten elektrischen Kontakt und zumindest einen zweiten elektrischen Kontakt aufweist,

wobei die elektrisch leitenden Abschnitte und die elektrischen Kontakte so ausgestaltet sind, dass der erste elektrische Kontakt mit dem ersten elektrisch leitenden Abschnitt und der zumindest eine zweite elektrische Kontakt mit dem zumindest einen zweiten elektrisch leitenden Abschnitt elektrisch kontaktierbar sind,
wobei das Gehäuse und die externe Einheit so ausgestaltet sind, dass sie formund/oder kraftschlüssig miteinander koppelbar sind, wobei das Gehäuse eine Aussparung mit zwei Wandungen aufweist, in der die externe Einheit zumindest teilweise form- und/oder kraftschlüssig aufnehmbar ist,
wobei die beiden Wandungen elektrisch voneinander isoliert sind und je-weils Teil der elektrisch leitenden Abschnitte des Gehäuses sind,
wobei die externe Einheit bewegbare Koppelelemente aufweist, die beim Koppeln der externen Einheit mit dem Gehäuse in damit korrespondierende wandungsseitige Koppelaussparungen des Gehäuses ein-greifen, um die externe Einheit in der Aussparung zu sichern,
wobei die Koppelelemente die elektrischen Kontakte sind,
wobei die elektrischen Kontakte jeweils in einem radialen Sackloch der externen Einheit angeordnet sind, und
wobei die elektrische Kontakte beim Koppeln der externen Einheit zumindest teilweise aus dem jeweiligen Sackloch herausgedrückt werden.

Das Gehäuse weist also mindestens zwei elektrisch leitende Abschnitte auf, d.h. es können auch drei oder mehr elektrisch leitende Abschnitte vorgesehen sein, wobei jeder elektrisch leitende Abschnitt gegen die jeweils anderen elektrisch leitenden Abschnitte elektrisch isoliert ist.

Entsprechend weist auch die externe Einheit mindestens zwei elektrische Kontakte auf, d.h. es können auch drei oder mehr elektrische Kontakte vorgesehen sein.

Vorteilhaft ist hierbei, dass keine herkömmlichen Stecker für eine Energieübertragung, etwa für das Aufladen eines Akkumulators, bzw. für eine Datenübertragung vorgesehen werden müssen, sodass eine potentielle Quelle für einen Fluideintritt in die Inspektions- und/oder Wartungseinheit eliminiert wird. Die Herstellung einer hermetisch dichten Inspektions- und/oder Wartungseinheit wird dadurch erheblich vereinfacht. Ferner müssen keine beweglichen Teile vorgesehen werden, sodass der Verschleiß erheblich reduziert werden kann.

In dem Gehäuse können ein elektrischer Verbraucher und/oder ein Energiespeicher, insbesondere Akkumulator, angeordnet sein und die elektrisch leitenden Abschnitte können mit dem elektrischen Verbraucher und/oder mit dem Energiespeicher gekoppelt sein.

Vorteilhaft ist es zudem, wenn die beiden elektrisch leitenden Abschnitte des Gehäuses jeweils zumindest abschnittsweise ein magnetisches bzw. ferromagnetisches Material aufweisen und die externe Einheit zumindest einen Magneten aufweist, der beim Kontaktieren der elektrischen Kontakte mit den elektrisch leitenden Abschnitten mit zumindest einem der magnetischen Abschnitte magnetisch zusammenwirkt.

Damit kann die externe Einheit an einer etwa weitgehend ebenen Oberfläche des Gehäuses angeordnet werden, wo sie mittels der Magnete so gehalten wird, dass die beiden elektrischen Kontakte der externen Einheit in Wirkverbindung mit dem jeweiligen elektrisch leitenden Abschnitt des Gehäuses stehen bzw. gehalten werden.

Vorteilhaft ist hierbei das sich daraus ergebende Abreisverhalten, d.h. auch bei einem beispielsweise ungewollten und gewaltsamen Entfernen der externen Einheit von der Inspektions- und/oder Wartungseinheit kommt es weder zu Beschädigungen an der externen Einheit noch an der Inspektions- und/oder Wartungseinheit.

Den Koppelelementen kann jeweils ein Stellmittel, vorzugsweise ein Federelement zugeordnet sein. Das Federelement kann so ausgestaltet sein, dass die Koppelelemente nach Aufnahme der externen Einheit in die Aussparung des Gehäuses in die Koppelaussparungen gedrückt werden. Beim Entfernen der externen Einheit aus der Aussparung des Gehäuses werden die Koppelelemente gegen die Federkraft aus den Koppelaussparungen herausgedrückt.

Die elektrischen Kontakte und die elektrisch leitenden Abschnitte können für eine Übertragung von elektrischer Energie vorgesehen sein.

Alternativ oder zusätzlich können zumindest einer der elektrischen Kontakte und zumindest einer der elektrisch leitenden Abschnitte für eine Signal- bzw. Datenübertragung verwendbar sein.

Die externe Einheit zumindest eines aus Ladeeinheit, Leuchtmittel, permanente Stromversorgung, externer Akkumulator, und Datenverarbeitungseinrichtung umfassen.

Der elektrische Verbraucher kann zumindest eines aus Datenverarbeitungseinrichtung, Bildaufnahmeeinrichtung, Leuchtmittel, Sensor, und Manipulator umfassen.

### Kurzbeschreibung der Erfindung

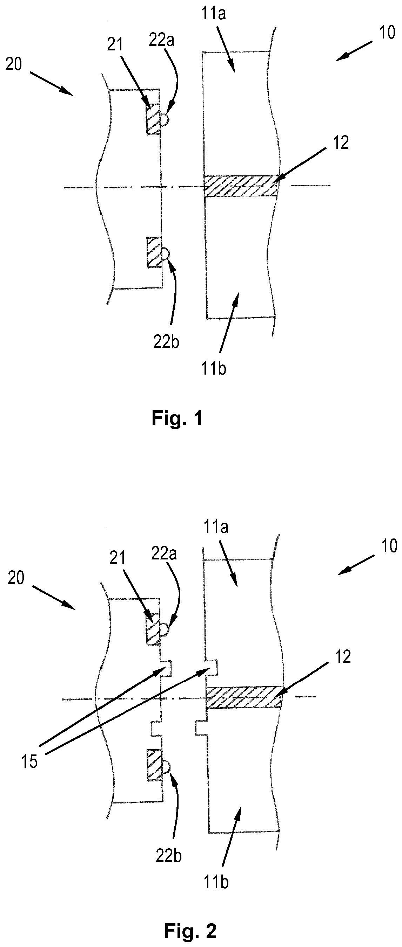

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Die Ausführungsformen gemäß Fig. 1, Fig. 2, Fig. 4 und Fig. 5 sind nicht erfindungsgemäß und dienen lediglich der Veranschaulichung. Es zeigt:
- Fig. 1: ein System mit einer Inspektions- und/oder Wartungseinheit und einer Ladeeinheit;
- Fig. 2: das in Fig. 1 gezeigte System mit einem mechanischen Verpolungsschutz;
- Fig. 3: das erfindungsgemäße System gemäß einer Ausführungsform;
- Fig. 4: ein System, dessen Akkumulator aufgeladen werden kann; und
- Fig. 5: ein System, bei dem die externe Einheit ein Leuchtmittel ist.

### Detaillierte Beschreibung der Figuren

Das erfindungsgemäße System weist eine Inspektions- und/oder Wartungseinheit und eine externe Einheit auf.

Zur Verdeutlichung der Erfindung wird nachfolgend mit Bezug auf Fig. 1 bis Fig. 4 ein System beschrieben, bei dem die externe Einheit eine Ladeeinheit ist und bei dem in dem Gehäuse der Inspektions- und/oder Wartungseinheit ein Akkumulator angeordnet ist, der bei Bedarf mit der Ladeeinheit aufgeladen werden kann.

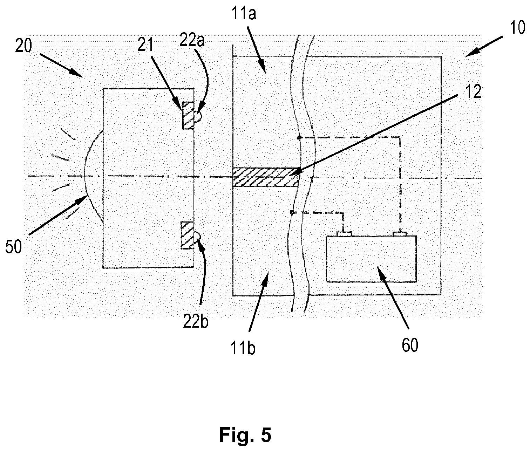

Anstelle der Ladeeinheit kann als externe Einheit beispielsweise auch ein elektrischer Verbraucher, etwa ein externes Leuchtmittel, wie mit Bezug auf Fig. 5 beschreiben wird, oder eine Datenverarbeitungseinrichtung, um über die elektrische Koppelung eine Datenübertragung abzuwickeln, vorgesehen sein. In einem weiteren Beispiel kann anstelle der Ladeeinheit auch ein externer Akkumulator vorgesehen sein, der beispielsweise für eine Notstromversorgung verwendet werden kann, wenn mit dem im Gehäuse der Inspektions- und/oder Wartungseinheit angeordneten Akkumulator die Energieversorgung für die Inspektions- und/oder Wartungseinheit nicht mehr gewährleistet werden kann.

Anstelle des Akkumulators oder zusätzlich zum Akkumulator kann in dem Gehäuse auch ein elektrischer Verbraucher, etwa Leuchtmittel oder eine Bildaufnahmeeinrichtung, vorgesehen sein, der über die elektrische Koppelung von einem externen Akkumulator mit elektrischer Energie versorgt wird. Gemäß einem weiteren Beispiel kann in dem Gehäuse auch eine Datenverarbeitungseinrichtung, etwa ein Mikrocontroller, angeordnet sein, wobei über die elektrische Koppelung eine Datenübertragung mit einer externen Datenverarbeitungseinrichtung abgewickelt werden kann.

Allen Ausführungsformen bzw. Ausführungsbeispielen ist gemein, dass die elektrische Koppelung zwischen der externen Einheit und der Inspektions- und/oder Wartungseinheit mit Hilfe von elektrisch leitenden Abschnitten des Gehäuses der Inspektions- und/oder Wartungseinheit, die gegeneinander elektrisch isoliert sind, und mit Hilfe von elektrischen Kontakten der externen Einheit, hergestellt wird, wobei auch die elektrischen Kontakte der externen Einheit gegeneinander elektrisch isoliert sind.

Fig. 1 zeigt eine Prinzipskizze eines Systems, das eine Inspektions- und/oder Wartungseinheit 10 und eine Ladeeinheit 20 aufweist. Die Inspektions- und/oder Wartungseinheit 10 wird nachfolgend vereinfacht auch als Inspektionseinheit 10 bezeichnet, wobei prinzipiell auch bei Wartungseinheiten realisierbar ist.

Die Inspektionseinheit 10 weist ein Gehäuse auf, in dem sämtliche elektrischen und elektronischen Komponenten untergebracht sind, beispielsweise ein Kameramodul und/oder Sensoren. In dem Gehäuse ist ferner ein hier nicht gezeigter Energiespeicher untergebracht, etwa ein Akkumulator, der für die Energieversorgung der elektrischen und elektronischen Komponenten vorgesehen ist.

Das Gehäuse selbst ist hierbei vorzugsweise fluid- und / oder gasdicht ausgestaltet.

Das Gehäuse weist einen ersten elektrisch leitenden Abschnitt 11a und einen zweiten elektrisch leitenden Abschnitt 11b auf, die unterschiedliche elektrische Potentiale führen können und gegeneinander elektrisch isoliert sind, etwa mittels einer Isolierschicht 12. Das Gehäuse kann aber auch mehr als zwei elektrisch leitende Abschnitte aufweisen.

Die elektrisch leitenden Abschnitte 11a, 11b des Gehäuses sind mit dem hier nicht gezeigten Akkumulator bzw. mit einer entsprechenden Ladeelektronik, die ihrerseits mit dem Akkumulator gekoppelt ist, gekoppelt, sodass über die beiden elektrisch leitenden Abschnitte 11a, 11b der Akkumulator aufgeladen werden kann. Die übrigen Abschnitte des Gehäuses können auch aus einem elektrisch nicht leitenden Material bestehen.

Die elektrisch leitenden Abschnitte 11a, 11b des Gehäuses stellen hierbei Kontaktstellen zur Verfügung, an die die Ladeeinheit 20 elektrisch kontaktiert werden kann, um die beiden elektrisch leitenden Abschnitte 11a, 11b mit einem elektrischen Strom für das Aufladen des Akkumulators zu beaufschlagen. Die Spannung und/oder die Stromstärke des von der Ladeeinheit 20 zu Verfügung gestellten elektrischen Stroms werden hierbei so eingestellt, dass eine Gefährdung eines Bedienpersonals während des Ladevorganges ausgeschlossen ist, sollte das Bedienpersonal versehentlich in Berührung mit den elektrisch leitenden Abschnitten 11a, 11b des Gehäuses kommen.

An der Ladeeinheit 20 ist ein erster elektrischer Kontakt 22a und ein zweiter elektrischer Kontakt 22b angeordnet. Diese beiden elektrischen Kontakte 22a, 22b sind so ausgestaltet und an der Ladeeinheit 20 angeordnet, dass sie beim Heranführen der Ladeeinheit 20 an die Inspektionseinheit 10 in Kontakt mit den jeweiligen elektrisch leitenden Abschnitten 11a, 11b des Gehäuses kommen. Die beiden elektrischen Kontakte 22a, 22b sind ihrerseits mit einer elektrischen Stromquelle gekoppelt, die den elektrischen Strom für das Laden des Akkumulators zur Verfügung stellt.

Die beiden elektrischen Kontakte 22a, 22b sind bei der in Fig. 1 gezeigten Prinzipskizze leicht erhaben ausgestaltet. Sie können aber beispielsweise auch als weitgehend flache Kontaktplättchen ausgestaltet sein. Die Geometrie der elektrischen Kontakte 22a, 22b hängt aber im Wesentlichen von der Geometrie der Kontaktstellen der elektrisch leitenden Abschnitte 11a, 11b des Gehäuses ab.

Ferner sind gemäß der in Fig. 1 gezeigten Prinzipskizze an der Ladeeinheit 20 Magnete (mindestens ein Magnet) angeordnet, die beim Heranführen der Ladeeinheit 20 an das Gehäuse der Inspektionseinheit 10 jeweils mit den elektrisch leitenden Abschnitten 11a, 11b des Gehäuses magnetisch zusammenwirken. Das Gehäuse weist hierbei zumindest abschnittsweise ein magnetisches bzw. ferromagnetisches Material auf. Mit Hilfe der Magnetkraft wird dann die Ladeeinheit 20 an dem Gehäuse 10 gehalten.

An dem Gehäuse der Inspektionseinheit 10 können ebenfalls zwei Magnete angeordnet sein, die mit den beiden Magneten 21 der Ladeeinheit korrespondieren. Vorteilhaft ist es hierbei, wenn sowohl an der Ladeeinheit 20 also auch an dem Gehäuse der Inspektionseinheit 10 jeweils ein Magnet mit seinem Pluspol und ein Magnet mit seinem Negativpol der Oberfläche des Gehäuses bzw. der Oberfläche der Ladeeinheit 20 zugewandt ist. Dadurch kann ein Verpolungsschutz beim Heranführen der Ladeeinheit 20 an das Gehäuse erreicht werden, weil die Magnete der Ladeeinheit nur bei einer Ausrichtung (bei der die Negativpole den Pluspolen zugewandt sind) der Ladeeinheit relativ zum Gehäuse an den Magneten des Gehäuses haften.

Fig. 2 zeigt eine alternative Ausgestaltung des in Fig. 1 gezeigten Systems anhand einer Prinzipskizze. Das in Fig. 2 gezeigte System unterscheidet sich von dem in Fig. 1 gezeigten System lediglich in der konkreten Ausgestaltung des Verpolungsschutzes.

Um einen Verpolungsschutz zu gewährleisten, ist es gemäß der Ausgestaltung nach Fig. 2 vorgesehen, an den sich gegenüberstehenden Oberflächen der Ladeeinheit und des Gehäuses eine Zapfen-/Nut-Konfiguration 15 auszugestalten, die lediglich eine Art der Kontaktierung der beiden elektrischen Kontakte 22a, 22b mit den beiden elektrisch leitenden Abschnitten 11a, 11b erlauben. Demnach ist an der Oberfläche der Ladeeinheit 20 ein Zapfen vorgesehen, der mit einer Nut an der Oberfläche des Gehäuses korrespondiert. Zudem ist an der Oberfläche der Ladeeinheit 20 eine Nut vorgesehen, die mit einem Zapfen an der Oberfläche des Gehäuses korrespondiert. Die Nute sind hierbei jeweils Aussparungen bzw. Vertiefungen an der Oberfläche, in die die jeweiligen Zapfen in Eingriff bringbar sind. Vorzugsweise ist nur in jener Stellung der Ladeeinheit relativ zum Gehäuse der Inspektionseinheit, bei der die beiden Zapfen in die jeweilige Nut eingreifen, eine Kontaktierung der beiden elektrischen Kontakte 22a, 22b der Ladeeinheit mit den beiden elektrisch leitenden Abschnitten 11a, 11b des Gehäuses möglich.

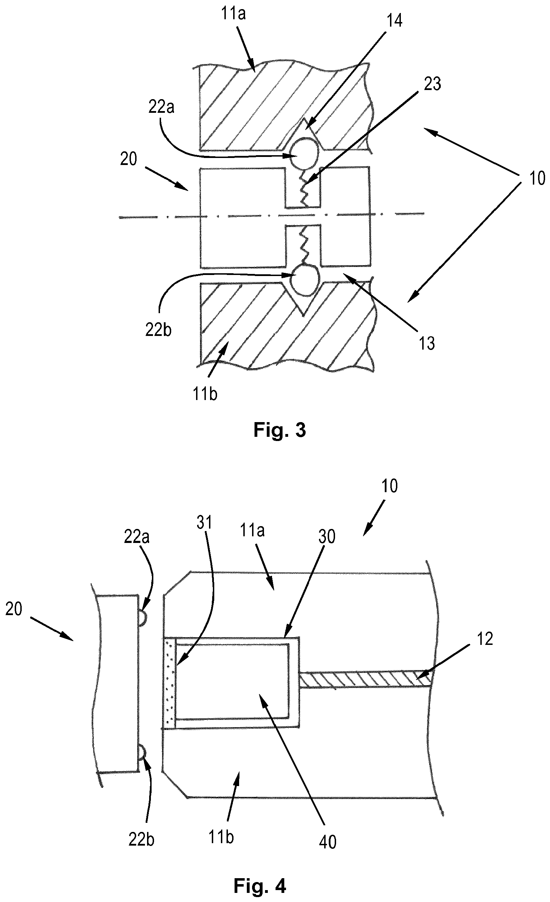

Fig. 3 zeigt eine Ausgestaltung eines erfindungsgemäßen Systems anhand einer Prinzipskizze.

Das Gehäuse der Inspektionseinheit 10 weist zwei elektrisch leitende Abschnitte 11a, 11b auf, die gegeneinander elektrisch isoliert sind. Erfindungsgemäß weist das Gehäuse eine Aussparung 13 auf, in der die Ladeeinheit 20 zumindest teilweise aufnehmbar ist, indem die Ladeeinheit 20 in diese Aussparung 13 eingeschoben wird. Die beiden elektrisch voneinander isolierten Wandungen der Aussparung 13 sind jeweils Teil der elektrisch leitenden Abschnitte 11a, 11b des Gehäuses, die jeweils in Kontakt mit den an der Ladeeinheit 20 angeordneten elektrischen Kontakten 22a, 22b gebracht werden, wenn die Ladeeinheit 20 in die Aussparung 13 eingeschoben wird.

Die Sicherung der Ladeeinheit 20 in der Aussparung 13 kann mittels an der Ladeeinheit 20 und an der Wandung der Aussparung angeordneten Magneten erfolgen.

Bei der in Fig. 3 gezeigten erfindungsgemäßen Ausgestaltung wird diese Sicherung mit Hilfe von beweglich ausgestalteten elektrischen Kontakten 22a, 22b erreicht, die hier kugelförmig ausgestaltet sind. Die kugelförmigen elektrischen Kontakte 22a, 22b sind jeweils in einem radialen Sackloch der Ladeeinheit 20 angeordnet. Die elektrischen Kontakte 22a, 22b können aber auch eine andere geeignete Geometrie aufweisen.

Den beiden elektrischen Kontakten 22a, 22b ist jeweils ein Stellmittel zugeordnet, das hier als Federelement 23 ausgestaltet ist. Mit den Federelementen werden die elektrischen Kontakte 22a, 22b zumindest teilweise aus dem jeweiligen Sackloch herausgedrückt, sodass der aus dem Sackloch hervorstehende Abschnitt der elektrischen Kontakte 22a, 22b in eine wandungsseitige Koppelaussparung 14 in Eingriff gebracht werden kann. Die elektrischen Kontakte 22a, 22b sind hierbei gegen ein Herausfallen aus den Sacklöchern gesichert.

Die elektrischen Kontakten 22a, 22b erfüllen hierbei zweierlei. Zum einen gelangen sie in Kontakt mit den elektrisch leitenden Abschnitten 11a, 11b des Gehäuses, um den im Gehäuse angeordneten Akkumulator aufladen zu können. Zum anderen sichern sie die Ladeeinheit vor einem zu leichten Lösen aus der Aussparung 13.

In einer alternativen Ausgestaltung können an der Ladeeinheit auch separate Koppelelemente vorgesehen sein, die lediglich zum Sichern der Ladeeinheit in der Aussparung 13 verwendet werden.

Fig. 4 zeigt eine Bespiel einer Inspektions- und/oder Wartungseinheit 10, dessen Akkumulator aufgeladen werden kann.

Bei der hier gezeigten Inspektions- und/oder Wartungseinheit 10 handelt es sich um einem Inspektionskopf, der beispielsweise an einem vorderen Ende eines Schiebeaals befestigt werden kann und mit dem Schiebeaal in einen Kanal verbracht und dort bewegt werden kann. Der Inspektionskopf kann aber auch an einem Fahrwagen montiert werden.

Der Inspektionskopf 10 bzw. das Gehäuse des Inspektionskopfes weist an dem distalen Ende eine axiale Aussparung 30 auf, in der ein Kameramodul 40 angeordnet ist. Die Öffnung der Aussparung 30 ist mit einer Schutzscheibe 31 gas- und/oder fluiddicht verschlossen.

Das Gehäuse des Inspektionskopfes 10 weist zwei gegeneinander isolierte elektrische leitende Abschnitte 11a, 11b auf.

An dem distalen Ende des Inspektionskopfes 10 wird die Ladeeinheit 20 herangeführt, sodass die beiden elektrischen Kontakte 22a, 22b elektrisch mit den beiden elektrisch leitenden Abschnitten 11a, 11b kontaktiert werden.

Dasselbe in Fig. 4 gezeigte Prinzip kann beispielsweise auch bei einem Spülkopf angewandt werden, der neben den Spüldüsen auch elektrische oder elektronische Komponenten aufweist, die mit einem im Spülkopf angeordneten Akkumulator mit elektrischer Energie versorgt werden.

Fig. 5 zeigt ein weiteres Beispiel eines Systems.

Die externe Einheit weist hier ein Leuchtmittel 50 auf. Die beiden elektrischen Kontakt2 22a und 22b sind mit dem Leuchtmittel 50 verbunden.

Die Inspektionseinheit 10 weist einen Akkumulator 60 auf, wobei der eine Pol des Akkumulators 60 mit dem ersten elektrisch leitenden Abschnitt 11a und der andere Pol des Akkumulators 60 mit dem zweiten elektrisch leitenden Abschnitt 11b des Gehäuses verbunden ist.

Über die elektrischen Kopplungen
- Abschnitt 11a der Inspektionseinheit 10 zum elektrischen Kontakt 22a der externen Einheit 20, und
- Abschnitt 11b der Inspektionseinheit 10 zum elektrischen Kontakt 22b der externen Einheit 20
kann das Leuchtmittel 50 mit elektrischer Energie des Akkumulators 60 versorgt werden.

Bei der vorstehend beschriebenen Ausgestaltung des erfindungsgemäßen Systems kann es vorgesehen sein, das Gehäuse der Inspektionseinheit 20 fluid- und/oder gasdicht auszugestalten.

### Bezugszeichen:

- 10: Inspektions- / Wartungseinheit
- 11a: erster elektrisch leitender Abschnitt der Inspektions- / Wartungseinheit 10
- 11b: zweiter elektrisch leitender Abschnitt der Inspektions- / Wartungseinheit 10
- 12: Isolierschicht / elektrisch isolierendes Material
- 13: Aussparung des Gehäuses der Inspektions- / Wartungseinheit 10 zur Aufnahme der externen Einheit 20
- 14: Koppelaussparungen im / am Gehäuse der Inspektions- / Wartungseinheit 10
- 15: Zapfen-/Nut
- 20: externe Einheit, mit der Inspektions- / Wartungseinheit 10 koppelbar, z.B. eine Ladeeinheit, eine Zusatzlicht oder ähnliches
- 21: Magnet an der externen Einheit 20
- 22a: erster elektrischer Kontakt der externen Einheit 20
- 22b: zweiter elektrischer Kontakt externen Einheit 20
- 23: Federelement
- 30: Aussparung
- 31: Schutzscheibe
- 40: Kameramodul
- 50: Leuchtmittel
- 60: Akkumulator

## Patentansprüche

1. Kanalinspektions- und/oder Wartungssystem mit einer elektrischen Schnittstelle, wobei das Kanalinspektions- und/oder Wartungssystem
- eine Kanalinspektions- und/oder Wartungseinheit (10), und
- eine externe Einheit (20), die mit der Kanalinspektions- und/oder Wartungseinheit (10) elektrisch koppelbar ist,
aufweist, wobei
- die Kanalinspektions- und/oder Wartungseinheit (10) ein Gehäuse aufweist, das fluid- und/oder gasdicht ausgestaltet ist,
- das Gehäuse einen ersten elektrisch leitenden Abschnitt (11a) und zumindest einen zweiten elektrisch leitenden Abschnitt (11b) aufweist, wobei die elektrisch leitenden Abschnitte (11a; 11b) mittels einer Isolierschicht (12) gegeneinander elektrisch isoliert sind,
- die externe Einheit (20) einen ersten elektrischen Kontakt (22a) und zumindest einen zweiten elektrischen Kontakt (22b) aufweist,
wobei die elektrisch leitenden Abschnitte (11a; 11b) und die elektrischen Kontakte (22a; 22b) so ausgestaltet sind, dass der erste elektrische Kontakt (22a) mit dem ersten elektrisch leitenden Abschnitt (11a) und der zumindest eine zweite elektrische Kontakt (22b) mit dem zumindest einen zweiten elektrisch leitenden Abschnitt (11b) elektrisch kontaktierbar sind,
wobei das Gehäuse und die externe Einheit (20) so ausgestaltet sind, dass sie form- und/oder kraftschlüssig miteinander koppelbar sind, wobei das Gehäuse eine Aussparung (13) mit zwei Wandungen aufweist, in der die externe Einheit (20) zumindest teilweise form- und/oder kraftschlüssig aufnehmbar ist,
wobei die beiden Wandungen elektrisch voneinander isoliert sind und jeweils Teil der elektrisch leitenden Abschnitte (11a; 11b) des Gehäuses sind, wobei die externe Einheit (20) bewegbare Koppelelemente aufweist, die beim Koppeln der externen Einheit (20) mit dem Gehäuse in damit korrespondierende wandungsseitige Koppelaussparungen (14) des Gehäuses eingreifen, um die externe Einheit (20) in der Aussparung (13) zu sichern,
wobei die Koppelelemente die elektrischen Kontakte (22a; 22b) sind, wobei die elektrischen Kontakte (22a; 22b) jeweils in einem radialen Sackloch der externen Einheit (20) angeordnet sind, und
wobei die elektrische Kontakte (22a; 22b) beim Koppeln der externen Einheit (20) zumindest teilweise aus dem jeweiligen Sackloch herausgedrückt werden.

2. Kanalinspektions- und/oder Wartungssystem nach dem vorgehenden Anspruch, wobei in dem Gehäuse ein elektrischer Verbraucher und/oder ein Energiespeicher, insbesondere Akkumulator, angeordnet sind und die elektrisch leitenden Abschnitte (11a; 11b) mit dem elektrischen Verbraucher und/oder mit dem Energiespeicher gekoppelt sind.

3. Kanalinspektions- und/oder Wartungssystem nach einem der vorgehenden Ansprüche, wobei die elektrisch leitenden Abschnitte (11a; 11b) des Gehäuses jeweils zumindest abschnittsweise ein magnetisches bzw. ferromagnetisches Material aufweisen und wobei die externe Einheit (20) zumindest einen Magneten (21) aufweist, der beim Kontaktieren der elektrischen Kontakte (22a; 22b) mit den elektrisch leitenden Abschnitten (11a; 11b) mit zumindest einem der magnetischen Abschnitte magnetisch zusammenwirkt.

4. Kanalinspektions- und/oder Wartungssystem nach einem der vorhergehenden Ansprüche, wobei den Koppelelementen jeweils ein Stellmittel, vorzugsweise ein Federelement (23) zugeordnet ist.

5. Kanalinspektions- und/oder Wartungssystem nach einem der vorhergehenden Ansprüche, wobei die elektrischen Kontakte (22a; 22b) und die elektrisch leitenden Abschnitte (11a; 11b) für eine Übertragung von elektrischer Energie vorgesehen sind.

6. Kanalinspektions- und/oder Wartungssystem nach einem der vorhergehenden Ansprüche, wobei zumindest einer der elektrischen Kontakte (22a; 22b) und zumindest einer der elektrisch leitenden Abschnitte (11a; 11b) für eine Signal- bzw. Datenübertragung verwendbar ist.

7. Kanalinspektions- und/oder Wartungssystem nach einem der vorhergehenden Ansprüche, wobei die externe Einheit (20) zumindest eines aus Ladeeinheit, Leuchtmittel, permanente Stromversorgung, externer Akkumulator, und Datenverarbeitungseinrichtung umfasst.

8. Kanalinspektions- und/oder Wartungssystem nach einem der Ansprüche 2 bis 7, wobei der elektrische Verbraucher zumindest eines aus Datenverarbeitungseinrichtung, Bildaufnahmeeinrichtung, Leuchtmittel, Sensor, und Manipulator umfasst.

## Claims

1. Sewer inspection and/or maintenance system comprising an electrical interface, wherein the sewer inspection and/or maintenance system has
- a sewer inspection and/or maintenance unit (10), and
- an external unit (20) that can be electrically coupled to the sewer inspection and/or maintenance unit (10),
wherein
- the sewer inspection and/or maintenance unit (10) has a housing that is designed to be fluid-tight and/or gas-tight,
- the housing has a first electrically conductive portion (11a) and at least one second electrically conductive portion (11b), wherein the electrically conductive portions (11a; 11b) are electrically insulated from one another by means of an insulating layer (12),
- the external unit (20) has a first electrical contact (22a) and at least one second electrical contact (22b),
wherein the electrically conductive portions (11a; 11b) and the electrical contacts (22a; 22b) are designed such that the first electrical contact (22a) can be brought into electrical contact with the first electrically conductive portion (11a), and the at least one second electrical contact (22b) can be brought into electrical contact with the at least one second electrically conductive portion (11b),
wherein the housing and the external unit (20) are designed such that they can be coupled to one another in a positive and/or non-positive manner, wherein the housing has a recess (13) having two walls, in which the external unit (20) can be at least partially received in a positive and/or non-positive manner,
wherein the two walls are electrically insulated from one another and are each part of the electrically conductive portions (11a; 11b) of the housing, wherein the external unit (20) has movable coupling elements that, when the external unit (20) is coupled to the housing, move into wall-side coupling recesses (14) of the housing which correspond to said coupling elements in order to secure the external unit (20) in the recess (13),
wherein the coupling elements are the electrical contacts (22a; 22b),
wherein the electrical contacts (22a; 22b) are each arranged in a radial blind hole of the external unit (20), and
wherein the electrical contacts (22a; 22b) are at least partially pressed out of the relevant blind hole when the external unit (20) is coupled.

2. Sewer inspection and/or maintenance system according to the preceding claim, wherein an electrical load and/or an energy storage device, in particular a rechargeable battery, are arranged in the housing and the electrically conductive portions (11a; 11b) are coupled to the electrical load and/or to the energy storage device.

3. Sewer inspection and/or maintenance system according to either of the preceding claims, wherein the electrically conductive portions (11a; 11b) of the housing each have a magnetic or ferromagnetic material, at least in portions, and wherein the external unit (20) has at least one magnet (21) that interacts magnetically with at least one of the magnetic portions when the electrical contacts (22a; 22b) are brought into contact with the electrically conductive portions (11a; 11b).

4. Sewer inspection and/or maintenance system according to any of the preceding claims, wherein a positioning means, preferably a spring element (23), is associated with each of the coupling elements.

5. Sewer inspection and/or maintenance system according to any of the preceding claims, wherein the electrical contacts (22a; 22b) and the electrically conductive portions (11a; 11b) are provided for a transmission of electrical energy.

6. Sewer inspection and/or maintenance system according to any of the preceding claims, wherein at least one of the electrical contacts (22a; 22b) and at least one of the electrically conductive portions (11a; 11b) can be used for a signal or data transmission.

7. Sewer inspection and/or maintenance system according to any of the preceding claims, wherein the external unit (20) comprises at least one of a charging unit, a lighting means, a permanent power supply, an external rechargeable battery and a data processing device.

8. Sewer inspection and/or maintenance system according to any of claims 2 to 7, wherein the electrical load comprises at least one of a data processing device, an image recording device, a lighting means, a sensor and a manipulator.

## Revendications

1. Système d'inspection et/ou de maintenance de canalisations, comportant une interface électrique, le système d'inspection et/ou de maintenance de canalisations présentant
- une unité d'inspection et/ou de maintenance de canalisations (10), et
- une unité externe (20) qui peut être couplée électriquement à l'unité d'inspection et/ou de maintenance de canalisations (10),
dans lequel
- l'unité d'inspection et/ou de maintenance de canalisations (10) présente un boîtier conçu de manière étanche aux fluides et/ou aux gaz,
- le boîtier présente une première section électriquement conductrice (11a) et au moins une seconde section électriquement conductrice (11b), les sections électriquement conductrices (11a ; 11b) étant isolées électriquement l'une de l'autre au moyen d'une couche isolante (12),
- l'unité externe (20) présente un premier contact électrique (22a) et au moins un second contact électrique (22b),
les sections électriquement conductrices (11a ; 11b) et les contacts électriques (22a ; 22b) étant conçus de manière à ce que le premier contact électrique (22a) puisse être électriquement mis en contact avec la première section électriquement conductrice (11a) et l'au moins un second contact électrique (22b) puisse être électriquement mis en contact avec l'au moins une seconde section électriquement conductrice (11b),
le boîtier et l'unité externe (20) étant conçus de manière à pouvoir être couplés l'un à l'autre par complémentarité de forme et/ou à force, le boîtier présentant un évidement (13) comportant deux parois et dans lequel l'unité externe (20) peut être au moins partiellement reçue par complémentarité de forme et/ou à force,
les deux parois étant électriquement isolées l'une de l'autre et faisant respectivement partie des sections électriquement conductrices (11a ; 11b) du boîtier, l'unité externe (20) présentant des éléments de couplage mobiles qui, lors du couplage de l'unité externe (20) au boîtier, viennent en prise dans des évidements de couplage (14) côté paroi correspondants du boîtier pour fixer l'unité externe (20) dans l'évidement (13), les éléments de couplage étant les contacts électriques (22a ; 22b),
les contacts électriques (22a ; 22b) étant respectivement disposés dans un trou borgne radial de l'unité externe (20), et
les contacts électriques (22a ; 22b) étant au moins partiellement poussés hors du trou borgne respectif lors du couplage de l'unité externe (20).

2. Système d'inspection et/ou de maintenance de canalisations selon la revendication précédente, dans lequel un consommateur électrique et/ou un dispositif de stockage d'énergie, en particulier un accumulateur, sont disposés dans le boîtier, et les sections électriquement conductrices (11a ; 11b) sont couplées au consommateur électrique et/ou au dispositif de stockage d'énergie.

3. Système d'inspection et/ou de maintenance de canalisations selon l'une des revendications précédentes, dans lequel les sections électriquement conductrices (11a ; 11b) du boîtier présentent respectivement un matériau magnétique ou ferromagnétique, au moins dans certaines régions, et l'unité externe (20) présentant au moins un aimant (21) qui interagit magnétiquement avec au moins l'une des sections magnétiques lorsque les contacts électriques (22a ; 22b) entrent en contact avec les sections électriquement conductrices (11a ; 11b).

4. Système d'inspection et/ou de maintenance de canalisations selon l'une des revendications précédentes, dans lequel respectivement un moyen d'actionnement, de préférence un élément à ressort (23), est associé aux éléments de couplage.

5. Système d'inspection et/ou de maintenance de canalisations selon l'une des revendications précédentes, dans lequel les contacts électriques (22a ; 22b) et les sections électriquement conductrices (11a ; 11b) sont prévus pour une transmission d'énergie électrique.

6. Système d'inspection et/ou de maintenance de canalisations selon l'une des revendications précédentes, dans lequel au moins l'un des contacts électriques (22a ; 22b) et au moins l'une des sections électriquement conductrices (11a ; 11b) peuvent être utilisés pour une transmission de signaux ou de données.

7. Système d'inspection et/ou de maintenance de canalisations selon l'une des revendications précédentes, dans lequel l'unité externe (20) comprend une unité de charge, et/ou un moyen d'éclairage, et/ou une alimentation en courant permanente, et/ou un accumulateur externe et/ou un appareil de traitement de données.

8. Système d'inspection et/ou de maintenance de canalisations selon l'une des revendications 2 à 7, dans lequel le consommateur électrique comprend un appareil de traitement de données, et/ou un appareil d'enregistrement d'images, et/ou un moyen d'éclairage, et/ou un capteur et/ou un manipulateur.
